# EUROPEAN PATENT SPECIFICATION

(11) **EP 2 751 997 B1**
(45) Date of publication and mention of the grant of the patent: **06.06.2018**
(21) Application number: 12829015.2
(22) Date of filing: 17.08.2012
(51) Int. Cl.: H04N 19/82, H04N 19/117, H04N 19/192

(54) **METHOD AND APPARATUS FOR ADAPTIVE LOOP FILTER WITH CONSTRAINED FILTER COEFFICIENTS**
VERFAHREN UND VORRICHTUNG FÜR EINEN ADAPTIVEN SCHLEIFENFILTER MIT BEGRENZTEN FILTERKOEFFIZIENTEN
PROCÉDÉ ET APPAREIL POUR FILTRE DE BOUCLE ADAPTATIF À COEFFICIENTS DE FILTRE CONTRAINTS

(30) Priority: 31.08.2011 US 201161529409 P; 19.10.2011 US 201161548995 P
(43) Date of publication of application: 09.07.2014
(73) Proprietor: Mediatek Inc., Hsin-Chu (TW)
(72) Inventor: HUANG, Yu-Wen, Taipei City Taiwan (TW); TSAI, Chia-Yang, New Taipei City Taiwan (TW); CHEN, Ching-Yeh, Taipei City Taiwan (TW); FU, Chih-Ming, Hsinchu City Taiwan (TW); LEI, Shaw-Min, Zhubei City Hsinchu County Taiwan (TW)
(74) Representative: Hoefer & Partner Patentanwälte mbB
(86) International application number: PCT/CN2012/080288
(87) International publication number: WO 2013/029474

(56) References cited:
- WO-A2-2009/050557
- CN-A- 101 742 323
- CN-A- 101 878 648
- US-A1- 2004 252 758
- US-A1- 2005 025 249
- UGUR K ET AL: "Efficient implementation of adaptive interpolation filters for low complexity video coding", IEEE TRANSACTIONS ON CONSUMER ELECTRONICS, IEEE SERVICE CENTER, NEW YORK, NY, US, vol. 55, no. 1, 1 February 2009 (2009-02-01), pages 257-263, XP011255284, ISSN: 0098-3063, DOI: 10.1109/TCE.2009.4814443
- JUAN DU ET AL: "A parallel and area-efficient architecture for deblocking filter and Adaptive Loop Filter", CIRCUITS AND SYSTEMS (ISCAS), 2011 IEEE INTERNATIONAL SYMPOSIUM ON, IEEE, 15 May 2011 (2011-05-15), pages 945-948, XP031997787, DOI: 10.1109/ISCAS.2011.5937723 ISBN: 978-1-4244-9473-6
- C-Y CHEN ET AL: "Non-CE8: Constrained ALF coefficients", 98. MPEG MEETING; 28-11-2011 - 2-12-2011; GENEVA; (MOTION PICTURE EXPERT GROUP OR ISO/IEC JTC1/SC29/WG11), no. m21773, 21 November 2011 (2011-11-21), XP030050336,
- LAI P ET AL: "CE8 Subtest 4: ALF using vertical-size 5 filters with up to 9 coefficients", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F303, 14 July 2011 (2011-07-14), XP030009326,
- HYUNHO JO ET AL: "Macroblock-Based Adaptive Loop Filter for Video Compression", MULTIMEDIA AND SIGNAL PROCESSING (CMSP), 2011 INTERNATIONAL CONFERENCE ON, IEEE, 14 May 2011 (2011-05-14), pages 366-369, XP031897473, DOI: 10.1109/CMSP.2011.166 ISBN: 978-1-61284-314-8
- YI, QING MING ET AL.: 'The Adaptive Loop Filter Design Based on AVS Standard' 2009 ISECS INTERNATIONAL COLLOQUIUM ON COMPUTING, COMMUNICATION, CONTROL, AND MANAGEMENT vol. 1, 08 August 2009, pages 409 - 413, XP031532741

## Description

### CROSS REFERENCE TO RELATED APPLICATIONS

The present invention claims priority to U.S. Provisional Patent Application, Serial No. 61/548,995, filed October 19, 2011, entitled "Constrained ALF Coefficients" and U.S. Provisional Patent Application, Serial No. 61/529,409, filed August 31, 2011, entitled "Filters Shapes For Adaptive Loop Filter".

### TECHNICAL FIELD

The present invention relates to a video coding system. In particular, the present invention relates to method and apparatus for reducing the complexity of Adaptive Loop Filter (ALF) by using ALF coefficients with constrained data range. Such a method and apparatus are known from UGUR K ET AL: "Efficient implementation of adaptive interpolation filters for low complexity video coding", IEEE TRANSACTIONS ON CONSUMER ELECTRONICS, IEEE SERVICE CENTER, NEW YORK, NY, US, vol. 55, no. 1, 1 February 2009 (2009-02-01), pages 257-263, XP011255284, ISSN: 0098-3063, DOI: 10.1109/TCE.2009.4814443 and WO 2009/050557 A2. A similar architecture without a constrained data range of the ALF coefficients is disclosed in JUAN DU ET AL: "A parallel and area-efficient architecture for deblocking filter and Adaptive Loop Filter", CIRCUITS AND SYSTEMS (ISCAS), 2011 IEEEINTERNATIONAL SYMPOSIUM ON, IEEE, 15 May 2011 (2011-05-15), pages 945-948, XP031997787, DOI: 10.1109/ISCAS. 2011.5937723, ISBN:978-1-4244-9473-6. Exemplary ALF filters developed during the High Efficiency Video Coding (HEVC) standardisation are described in LAI P ET AL: "CE8 Subtest 4: ALF using vertical-size 5 filters with up to 9 coefficients", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16); URL: HTTP:// WFTP3.ITU.INT/AV-ARCH/JCTVC-SITE/, no. JCTVC-F303, 14 July 2011 (2011-07-14).

### BACKGROUND

Motion estimation is an effective inter-frame coding technique to exploit temporal redundancy in video sequences. Motion-compensated inter-frame coding has been widely used in various international video coding standards The motion estimation adopted in various coding standards is often a block-based technique, where motion information such as coding mode and motion vector is determined for each macroblock or similar block configuration. In addition, intra-coding is also adaptively applied, where the picture is processed without reference to any other picture. In the emerging High Efficiency Video Coding (HEVC) standard, the basic unit for compression, termed Coding Unit (CU), is a 2Nx2N square block, and each CU can be recursively split into four smaller CUs until the predefined minimum size is reached. The inter-predicted or intra-predicted residues are usually further processed by transformation, quantization, and entropy coding to generate compressed video bitstream. During the encoding process, coding artifacts are introduced, particularly in the quantization process. In order to alleviate the coding artifacts, additional processing has been applied to reconstructed video to enhance picture quality in newer coding systems. The additional processing is often configured in an in-loop operation so that the encoder and decoder may derive the same reference pictures to achieve improved system performance.

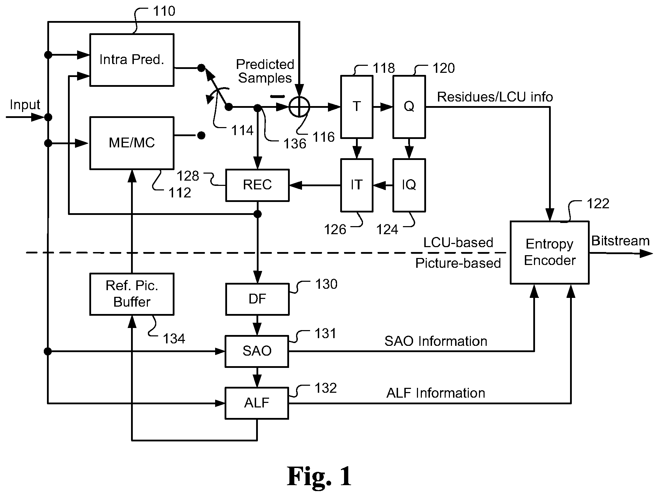

Fig. 1 illustrates an exemplary adaptive inter/intra video coding system incorporating in-loop processing adopted by HEVC. For inter-prediction, Motion Estimation (ME)/Motion Compensation (MC) 112 is used to provide prediction data based on video data from other picture or pictures. Switch 114 selects Intra Prediction 110 or inter-prediction data and the selected prediction data is supplied to Adder 116 to form prediction errors, also called residues. The prediction error is then processed by Transformation (T) 118 followed by Quantization (Q) 120. The transformed and quantized residues are then coded by Entropy Encoder 122 to form a video bitstream corresponding to the compressed video data. The bitstream associated with the transform coefficients is then packed with side information such as motion, mode, and other information associated with the image area. The side information may also be subject to entropy coding to reduce required bandwidth. Accordingly, the data associated with the side information are provided to Entropy Encoder 122. When an inter-prediction mode is used, a reference picture or pictures have to be reconstructed at the encoder end as well. Consequently, the transformed and quantized residues are processed by Inverse Quantization (IQ) 124 and Inverse Transformation (IT) 126 to recover the residues. The residues are then added back to prediction data 136 at Reconstruction (REC) 128 to reconstruct video data. The reconstructed video data may be stored in Reference Picture Buffer 134 and used for prediction of other frames.

As shown in Fig. 1, incoming video data undergoes a series of processing in the encoding system. The reconstructed video data from REC 128 may be subject to various impairments due to a series of processing. Accordingly, various in-loop processing is applied to the reconstructed video data before the reconstructed video data are stored in the Reference Picture Buffer 134 in order to improve video quality. In the High Efficiency Video Coding (HEVC) standard being developed, Deblocking Filter (DF) 130, Sample Adaptive Offset (SAO) 131 and Adaptive Loop Filter (ALF) 132 have been developed to enhance picture quality. The in-loop filter information may have to be incorporated in the bitstream so that a decoder can properly recover the required information. Therefore, in-loop filter information from SAO and ALF is provided to Entropy Encoder 122 for incorporation into the bitstream. In Fig. 1, DF 130 is applied to the reconstructed video first; SAO 131 is then applied to DF-processed video; and ALF 132 is applied to SAO-processed video. However, the processing order among DF, SAO and ALF can be re-arranged.

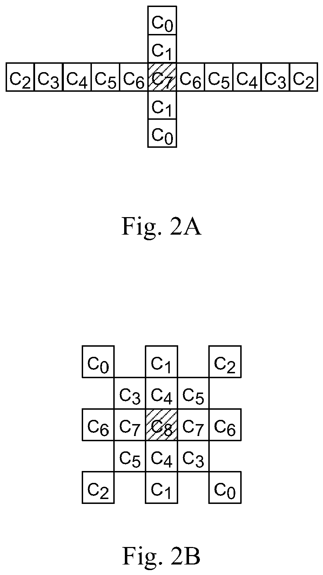

In HM-4.0, ALF has two filter shape options, i.e., cross-11x5 and snowflake-5x5 as shown in Fig. 2A and Fig. 2B respectively. Both ALF filter shapes can be applied to the luma and chroma components. In each picture, the luma component and the chroma components can choose an ALF filter shape independently. ALF uses Finite Impulse Response (FIR) filtering with an offset term. The parameters of ALF comprise coefficients and the offset term. The offset term or any of the coefficients is a member of the parameters. An ALF output pixel, Y, can be represented as *C^{T}X*+*O*, where *C* is a coefficient vector, ***X*** is a vector of pre-ALF pixels, and *O* is the offset term. Locations of pixels ***X*** are determined according to the selected filter shape (or footprint). Optimal filter coefficients including the offset term can be derived and coded in the bitstream to minimize the mean squared error between ALF output pixels and original pixels. Moreover, localization can be incorporated in each picture so that different coefficients and offsets may be applied to different areas. For the cross-11x5 filter, the filter coefficients are labeled by *C₀*,...,*C₇* as shown in Fig. 2A, where *C₇* is located at the center of the filter. Accordingly, *C₇* is called the center coefficient and *C₀*,...,*C₆* are called non-center coefficients for the cross-11x5 ALF filter. For the snowflake-5x5 filter, the filter coefficients are labeled by *C₀*,...,*C₈* as shown in Fig. 2B, where *C₈* is located at the center of the filter. Accordingly, *C₈* is called the center coefficient and *C₀*,..*.*,*C₇* are called non-center coefficients for the snowflake-5x5 filter.

In software or hardware based implementations, general-purpose multipliers will be needed for ALF because the coefficients are adaptive values instead of fixed numbers. If the range of a coefficient value is unlimited or very large, the multiplier can be very expensive if implemented in hardware. Furthermore, filter coefficients with large dynamic range tend to be more sensitive to noise. Accordingly, it is desirable to develop a method and apparatus to reduce hardware-based implementation cost.

### SUMMARY

A method and apparatus for processing of coded video according to the invention are defined in claims 1 and 9, respectively. The respective dependent claims define respective preferred embodiments thereof, respectively.

### BRIEF DESCRIPTION OF DRAWINGS

Fig. 1 illustrates an exemplary adaptive inter/intra video encoding system with DF, SAO and ALF in-loop processings.
Fig. 2A illustrates an example of ALF corresponding to the cross-11x5 filter.
Fig. 2B illustrates an example of ALF corresponding to the snowflake-5x5 filter.
Fig. 3 illustrates an exemplary flow chart of a coding system incorporating ALF with constrained data range according to the present invention.
Fig. 4 illustrates an exemplary flow chart of an encoding system incorporating ALF with constrained data range according to the present invention.

### DETAILED DESCRIPTION

In order to reduce the cost of multipliers associated with hardware based implementation of ALF, embodiments according to the present invention limit the data range of ALF coefficients. Based on analysis of the data ranges of coefficient values, it is found that center coefficients tend to be positive and close to 1.0, and non-center coefficients tend to be close to 0. Accordingly, in one embodiment of the present invention, the center coefficient is clipped to [0.0, 2.0) and the non-center coefficient is clipped to [-1.0, 1.0), where the square bracket symbol indicates the end-point data is included in the range and the parenthesis symbol indicates the end-point data is not included in the range. In the current HM-4.0, eight fractional binary digits are used to represent a coefficient. The corresponding constrained data ranges of center coefficient and non-center coefficients become [0, 1.99609375] and [-1, 0.99609375] respectively for data representation using eight fractional binary digits. For data representation using other fractional binary digits, the corresponding constrained data ranges of center coefficient and non-center coefficients will vary accordingly. The present invention is not limited to any particular number of fractional binary digits for data representation.

In the example of eight fractional binary digits and the constrained data ranges mentioned above, the center coefficient and non-center coefficients can be represented in 10 bits. Therefore, in high efficiency (HE) common test conditions of HEVC where pixel data are represented in 10 bits, the two multiplier inputs are 10 bits (for the coefficient) and 10 bits (for the pixel). The multiplier outputs are represented in 20 bits. In low complexity common test conditions of HEVC where pixel data are represented in 8 bits, the two multiplier inputs are 10 bits (for the coefficient) and 8 bits (for the pixel). The multiplier outputs are represented in 18 bits. Other constrained data range may also be used to practice the present invention. For example, the constrained data ranges of [-1.0, 1.0) and [-0.5, 0.5) may be used for the center and non-center coefficients respectively.

The offset term can also be limited though the cost reduction may be small. An example is to clip the offset to the range of [-(2D)/N, (2D-1)/N), where D denotes the pixel bit depth and N can be a power-of-two integer, such as 1, 2, 4, 8, 16, etc. Another example is to clip the offset to the range of [-2M, 2M), where M is an integer. As one example, the pixel depth D can be chosen as the integer for M.

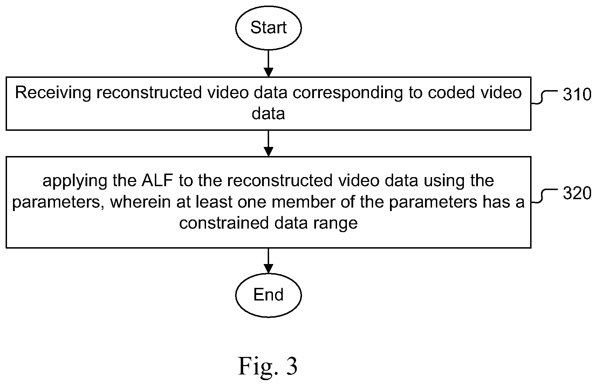

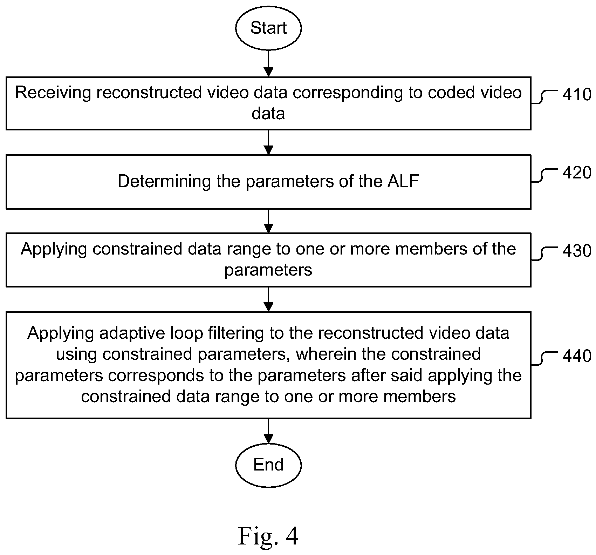

Fig. 3 illustrates an exemplary flow chart of a coding system incorporating ALF with constrained data range according to the present invention. The reconstructed video data corresponding to coded video data is received as shown in step 310. The ALF with constrained data range is applied to the reconstructed video data as shown in step 320, wherein at least one member of the ALF parameters has constrained data range. The exemplary flow chart in Fig. 3 can be implemented in an encoding system or a decoding system. In an embodiment of the decoding system, the decoder determines the ALF parameters for at least a portion of a picture from a received bitstream and filters the reconstructed video data associated with said at least one portion according to the ALF parameter. Fig. 4 illustrates an embodiment of the encoding system described in more details.

Fig. 4 illustrates an exemplary flow chart of an encoding system incorporating ALF with constrained data range according to the present invention. The reconstructed video data corresponding to coded video data is received as shown in step 410. The parameters of the ALF are determined in step 420, where the parameters may be derived by the encoder, retrieved from storage, or received from other processing module. Data range constraining is then applied to one or more members of the ALF parameters as shown in step 430. The ALF with constrained data range is applied to the reconstructed video data as shown in step 440. By constraining or clipping at least one member of the ALF parameters, the number of multipliers required by the ALF processing in both the encoder and decoder can be limited. The bit width of multipliers required for the ALF processing can be managed in accordance with the ALF data range constraining.

The above description is presented to enable a person of ordinary skill in the art to practice the present invention as provided in the context of a particular application and its requirement. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software code, or a combination of both. For example, an embodiment of the present invention can be a circuit integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the spirit and scope of the invention.

The described examples are to be considered in all respects only as illustrative and not restrictive. The scope of the invention is therefore, indicated by the appended claims rather than by the foregoing description. All changes which come within the meaning and range of equivalency of the claims are to be embraced within their scope.

## Claims

1. A method for processing of coded video using adaptive loop filter, in the following also referred to as ALF, as developed during development of the High Efficiency Video Coding standard HEVC, wherein parameters of the ALF comprise a coefficient vector consisting of one center coefficient and one or more non-center coefficient, the method comprising:
receiving reconstructed video data corresponding to coded video data; and
applying the ALF to the reconstructed video data using the parameters, **characterized in that** the parameters have a constrained data range, and a constrained data range of the center coefficient is different from a constrained data range of said one or more non-center coefficient.

2. The method of Claim 1, wherein the constrained data range for said one or more non-center coefficient is [-1.0, 1.0).

3. The method of Claim 1, wherein the constrained data range for said one or more non-center coefficient is [-0.5, 0.5).

4. The method of Claim 1, further comprising:
determining the parameters of the ALF; and
clipping the center coefficient to the constrained data range for the center coefficient and clipping said one or more non-center coefficient to the constrained data range for the one or more non-center coefficient.

5. The method of Claim 1, wherein the constrained data range for the center coefficient is [0.0, 2.0)

6. The method of Claim 1, wherein the constrained data range for the center coefficient is [0.5, 1.5).

7. The method of Claim 1, wherein the parameters of the ALF further comprise an offset term, an ALF output pixel Y is derived from Y= C^{T}X+O, where C is the coefficient vector, X is a vector of pre-ALF pixels, and O is the offset term, and the constrained data range for the offset term is [-2^{D}/N, (2^{D}-1)/N), wherein D denotes pixel bit depth and N is a power-of-two integer.

8. The method of Claim 1, wherein the parameters of the ALF further comprise an offset term, an ALF output pixel Y is derived from Y= C^{T}X+O, where C is the coefficient vector, X is a vector of pre-ALF pixels, and O is the offset term, and the constrained data range for the offset term is [-2^{M}, 2^{M}), wherein M is an integer.

9. An apparatus for processing of coded video using adaptive loop filter, in the following also referred to as ALF, as developed during development of the High Efficiency Video Coding standard HEVC, wherein parameters of the ALF comprise a coefficient vector consisting of one center coefficient and one or more non-center coefficient, the apparatus comprising:
means for receiving reconstructed video data corresponding to coded video data; and
means for applying the ALF to the reconstructed video data using the parameters, **characterized in that** the parameters have a constrained data range, and a constrained data range of the center coefficient is different from a constrained data range of said one or more non-center coefficient.

10. The apparatus of Claim 9, wherein the parameters of the ALF further comprise an offset term, an ALF output pixel Y is derived term, Y= C^{T}X+O, where C is the coefficient vector, X is a vector of pre-ALF pixels, and O is the offset term, and the constrained data range for the offset term is [-2^{D}/N, (2^{D}-1)/N), wherein D denotes pixel bit depth and N is a power-of-two integer.

11. The apparatus of Claim 9, wherein the constrained data range for the center coefficient is [0.0, 2.0).

12. The apparatus of Claim 9, wherein the constrained data range for said one or more non-center coefficient is [-1.0, 1.0).

13. The apparatus of Claim 9, further comprising:
means for determining the parameters of the ALF; and
means for clipping the center coefficient to the constrained data range for the center coefficient and clipping said one or more non-center coefficient to the constrained data range for the one or more non-center coefficient.

## Patentansprüche

1. Verfahren zum Verarbeiten von codiertem Video unter Verwendung eines adaptiven Loop-Filters, im Folgenden auch als ALF bezeichnet, wie während einer Entwicklung des High-Efficiency-Video-Coding-Standards HEVC entwickelt, wobei Parameter des ALFs einen Koeffizientenvektor aufweisen, der aus einem Mittenkoeffizienten und einem oder mehreren Nicht-Mittenkoeffizienten besteht, wobei das Verfahren aufweist:
Empfangen von rekonstruierten Videodaten, die zu codierten Videodaten korrespondieren; und
Anwenden des ALFs auf die rekonstruierten Videodaten unter Verwendung der Parameter,
**dadurch gekennzeichnet, dass**
die Parameter einen begrenzten Datenbereich aufweisen, und
sich ein begrenzter Datenbereich des Mittenkoeffizienten von einem begrenzten Datenbereich des einen oder der mehreren Nicht-Mittenkoeffizienten unterscheidet.

2. Verfahren gemäß Anspruch 1, wobei der begrenzte Datenbereich des einen oder der mehreren Nicht-Mittenkoeffizienten [-1,0, 1,0) ist.

3. Verfahren gemäß Anspruch 1, wobei der begrenzte Datenbereich des einen oder der mehreren Nicht-Mittenkoeffizienten [-0,5, 0,5) ist.

4. Verfahren gemäß Anspruch 1, weiter aufweisend:
Bestimmen der Parameter des ALFs; und
Begrenzen des Mittenkoeffizienten auf den begrenzten Datenbereich für den Mittenkoeffizienten und Begrenzen des einen oder der mehreren Nicht-Mittenkoeffizienten auf den begrenzten Datenbereich für den einen oder die mehreren Nicht-Mittenkoeffizienten.

5. Verfahren gemäß Anspruch 1, wobei der begrenzte Datenbereich für den Mittenkoeffizienten [0,0, 2,0) ist.

6. Verfahren gemäß Anspruch 1, wobei der begrenzte Datenbereich für den Mittenkoeffizienten [0,5, 1,5) ist.

7. Verfahren gemäß Anspruch 1, wobei die Parameter des ALFs weiter einen Versatzterm aufweisen, ein ALF-Ausgabepixel Y aus Y=C^{T}X+O hergeleitet wird, wobei C der Koeffizientenvektor ist, X ein Vektor von pre-ALF-Pixeln ist und O der Versatzterm ist, und der begrenzte Datenbereich für den Versatzterm [-2^{D}/N, (2^{D}-1)/N) ist, wobei D eine Pixel-Bit-Tiefe kennzeichnet und N eine ganzzahlige Zweierpotenz ist.

8. Verfahren gemäß Anspruch 1, wobei die Parameter des ALFs weiter einen Versatzterm aufweisen, ein ALF-Ausgabepixel Y aus Y=C^{T}X+O hergeleitet wird, wobei C der Koeffizientenvektor ist, X ein Vektor von pre-ALF-Pixeln ist und O der Versatzterm ist, und der begrenzte Datenbereich für den Versetzterm [-2^{M}, 2^{M}) ist, wobei M eine ganze Zahl ist.

9. Vorrichtung zum Verarbeiten von codiertem Video unter Verwendung eines adaptiven Loop-Filters, im Folgenden auch als ALF bezeichnet, wie während einer Entwicklung des High-Efficiency-Video-Coding-Standards HEVC entwickelt, wobei Parameter des ALFs einen Koeffizientenvektor aufweisen, der aus einem Mittenkoeffizienten und einem oder mehreren Nicht-Mittenkoeffizienten besteht, wobei die Vorrichtung aufweist:
eine Einrichtung zum Empfangen von rekonstruierten Videodaten, die zu codierten Videodaten korrespondieren; und
eine Einrichtung zum Anwenden des ALFs auf die rekonstruierten Videodaten unter Verwendung der Parameter, **dadurch gekennzeichnet, dass**
die Parameter einen begrenzten Datenbereich aufweisen, und
sich ein begrenzter Datenbereich des Mittenkoeffizienten von einem begrenzten Datenbereich des einen oder der mehreren Nicht-Mittenkoeffizienten unterscheidet.

10. Vorrichtung gemäß Anspruch 9, wobei die Parameter des ALFs weiter einen Versatzterm aufweisen, ein ALF-Ausgabepixel Y aus Y=C^{T}X+O hergeleitet wird, wobei C der Koeffizientenvektor ist, X ein Vektor von pre-ALF-Pixeln ist und O der Versatzterm ist, und der begrenzte Datenbereich für den Versatzterm [-2^{D}/N, (2^{D}-1)/N) ist, wobei D eine Pixel-Bit-Tiefe kennzeichnet und N eine ganzzahlige Zweierpotenz ist.

11. Vorrichtung gemäß Anspruch 9, wobei der begrenzte Datenbereich für den Mittenkoeffizienten [0,0, 2,0) ist.

12. Vorrichtung gemäß Anspruch 9, wobei der begrenzte Datenbereich für den einen oder die mehreren Nicht-Mittenkoeffizienten [-1,0, 1,0) ist.

13. Vorrichtung gemäß Anspruch 9, weiter aufweisend:
eine Einrichtung zum Bestimmen der Parameter des ALFs; und
eine Einrichtung zum Begrenzen des Mittenkoeffizienten auf den begrenzten Datenbereich für den Mittenkoeffizienten und Begrenzen des einen oder der mehreren Nicht-Mittenkoeffizienten auf den begrenzten Datenbereich für den einen oder die mehreren Nicht-Mittenkoeffizienten.

## Revendications

1. Procédé de traitement de vidéo codée en utilisant un filtre de boucle adaptatif, ci-après également dénommé ALF, tel que développé pendant le développement de la norme de Codage Vidéo à Haute Efficacité HEVC, où des paramètres du filtre ALF comprennent un vecteur de coefficients constitué d'un coefficient central et d'un ou de plusieurs coefficient(s) non central/non centraux, le procédé comprenant le fait :
de recevoir des données vidéo reconstruites correspondant à des données vidéo codées ; et
d'appliquer le filtre ALF aux données vidéo reconstruites en utilisant les paramètres, **caractérisé en ce que**
les paramètres ont une plage de données contrainte,
et une plage de données contrainte du coefficient central est différente d'une plage de données contrainte dudit ou desdits plusieurs coefficient(s) non central/non centraux.

2. Procédé de la revendication 1, dans lequel la plage de données contrainte pour ledit ou lesdits plusieurs coefficient(s) non central/non centraux est [-1,0, 1,0).

3. Procédé de la revendication 1, dans lequel la plage de données contrainte pour ledit ou lesdits plusieurs coefficient(s) non central/non centraux est [-0,5, 0,5).

4. Procédé de la revendication 1, comprenant en outre le fait :
de déterminer les paramètres du filtre ALF ; et
d'écrêter le coefficient central selon la plage de données contrainte pour le coefficient central et d'écrêter ledit ou lesdits plusieurs coefficient(s) non central/non centraux selon la plage de données contrainte pour le ou les plusieurs coefficient(s) non central/non centraux.

5. Procédé de la revendication 1, dans lequel la plage de données contrainte pour le coefficient central est [0,0, 2,0).

6. Procédé de la revendication 1, dans lequel la plage de données contrainte pour le coefficient central est [0,5, 1,5).

7. Procédé de la revendication 1, dans lequel les paramètres du filtre ALF comprennent en outre un terme de décalage, un pixel de sortie de filtre ALF Y est obtenu à partir de Y = C^{T}X+O, où C représente le vecteur de coefficients, X représente un vecteur de pixels pré-ALF et O représente le terme de décalage, et la plage de données contrainte pour le terme de décalage est [-2^{D}/N, (2^{D}-1)/N), où D désigne une profondeur de bits par pixel et N représente un nombre entier puissance de deux.

8. Procédé de la revendication 1, dans lequel les paramètres du filtre ALF comprennent en outre un terme de décalage, un pixel de sortie de filtre ALF Y est obtenu à partir de Y = C^{T}X+O, où C représente le vecteur de coefficients, X représente un vecteur de pixels pré-ALF et O représente le terme de décalage, et la plage de données contrainte pour le terme de décalage est [-2^{M}, 2^{M}), où M est un nombre entier.

9. Appareil de traitement de vidéo codée en utilisant un filtre de boucle adaptatif, ci-après également dénommé ALF, tel que développé pendant le développement de la norme de Codage Vidéo à Haute Efficacité HEVC, où des paramètres du filtre ALF comprennent un vecteur de coefficients constitué d'un coefficient central et d'un ou de plusieurs coefficient(s) non central/non centraux, l'appareil comprenant :
un moyen pour recevoir des données vidéo reconstruites correspondant à des données vidéo codées ; et
un moyen pour appliquer le filtre ALF aux données vidéo reconstruites en utilisant les paramètres, **caractérisé en ce que** les paramètres ont une plage de données contrainte,
et une plage de données contrainte du coefficient central est différente d'une plage de données contrainte dudit ou desdits plusieurs coefficient(s) non central/non centraux.

10. Appareil de la revendication 9, dans lequel les paramètres du filtre ALF comprennent en outre un terme de décalage, un pixel de sortie de filtre ALF Y est obtenu à partir de Y = C^{T}X+O, où C représente le vecteur de coefficients, X représente un vecteur de pixels pré-ALF et O représente le terme de décalage, et la plage de données contrainte pour le terme de décalage est [-2^{D}/N, (2^{D}-1)/N), où D désigne une profondeur de bits par pixel et N représente un nombre entier puissance de deux.

11. Appareil de la revendication 9, dans lequel la plage de données contrainte pour le coefficient central est [0,0, 2,0).

12. Appareil de la revendication 9, dans lequel la plage de données contrainte pour ledit ou lesdits plusieurs coefficient(s) non central/non centraux est [-1,0, 1,0).

13. Appareil de la revendication 9, comprenant en outre :
un moyen pour déterminer les paramètres du filtre ALF ; et
un moyen pour écrêter le coefficient central selon la plage de données contrainte pour le coefficient central et pour écrêter ledit ou lesdits plusieurs coefficient(s) non central/non centraux selon la plage de données contrainte pour le ou les plusieurs coefficient(s) non central/non centraux.
